# EUROPEAN PATENT APPLICATION

(11) **EP 4 400 742 A1**
(43) Date of publication of application: **17.07.2024**
(21) Application number: 23218600.7
(22) Date of filing: 20.12.2023
(51) Int. Cl.: F16F 9/46, B62K 25/08, B62K 25/04, F16F 9/54, F16F 9/18

(54) **FRONT FORK SHOCK ABSORBER**

(30) Priority: 09.01.2023 TW 112200246 U
(71) Applicant: Bike Pow Co.,Ltd., 24344 New Taipei City (TW)
(72) Inventor: Huang, Chih-Hang, 24344 New Taipei City (TW)
(74) Representative: Cabinet Chaillot

(57) **Abstract**

The present invention relates to a front fork shock absorber, mainly including a shock absorber body, an adjusting rotating shaft, a sleeve, and a rebound adjusting button. The upper end of the adjusting rotating shaft is connected to a damping adjusting structure of the shock absorber body and its lower end is provided with a butt-joint structure. The sleeve encases the periphery of the adjusting rotating shaft. The rebound adjusting button is arranged below the sleeve, and a connecting member connected with the butt-joint structure is arranged above the rebound adjusting button. According to the structure of the front fork shock absorber in the present invention, the rebound adjusting button is located at the lower end of the shock absorber body so as to prevent a damping adjusting button from being covered by a shell of the motor vehicle, thus making it difficult to adjust.

## Description

### 1. Field of the Invention

The present invention belongs to the technical field of motor vehicles, in particular to a front fork shock absorber provided with a rebound adjusting button at the bottom of the shock absorber.

### 2. Description of the Prior Art

There are more people but less land in Taiwan. At the early stage, the transportation system was imperfect. Therefore, most people were used to taking a motor vehicle (or a motorcycle) as a transport tool. According to statistics, there were more than 14 million motor vehicles in Taiwan in August 2022. Therefore, the market of the motor vehicle-related industry as well as parts and components thrive in Taiwan.

When riding a motor vehicle, the tires of a motor vehicle are in contact with the ground in a riding process. According to the difference in the flatness of the ground, a motor vehicle body presses downwards due to its weight and generates an upward counterforce. The motor vehicle vibrates up and down under the action of a driving speed in a driving process, so that a rider is very uncomfortable when riding. Meanwhile, driving safety can be influenced. Therefore, a shock absorber is arranged on the motor vehicle to absorb the vibration generated when the motor vehicle is driven.

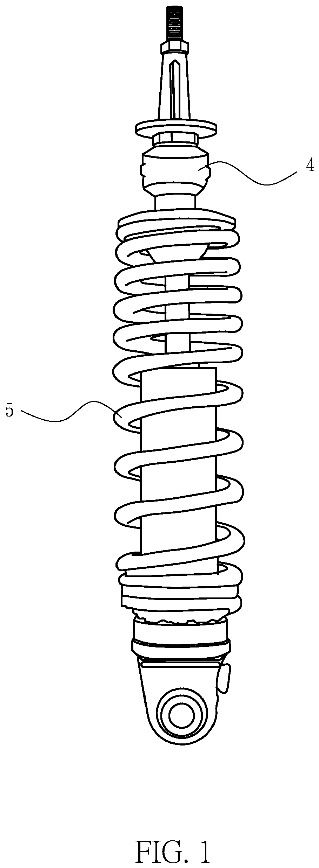

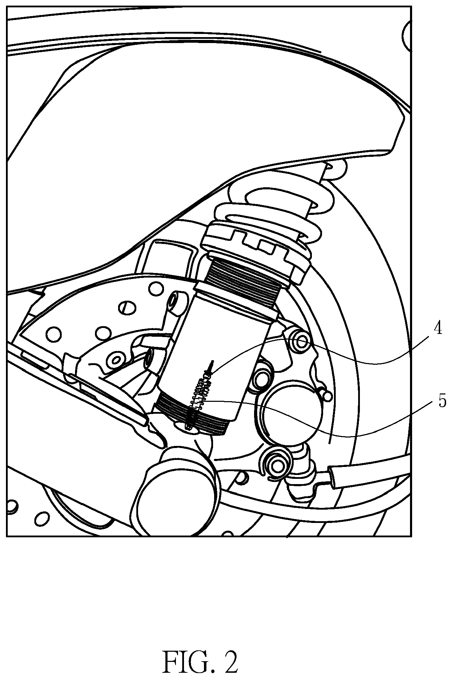

At present, there are considerable types of shock absorbers on the market. FIG. 1 shows a type of mono-tube shock absorber structure, such mono-tube type shock absorber structure must correspond to a mechanism of a locking shock absorber for a motor vehicle, so that the rebound adjusting button 4 of the rebound must be arranged above the shock absorber 5. Therefore, when a rider adjusts the shock absorber 5, since the rebound adjusting button 4 is covered by a shell of a motor vehicle body (as shown in FIG. 2), it is unfriendly to adjust for a rider. Although there are shock absorbers 5 with a twin-tube mechanism or gas cylinder that arrange the damping adjusting button below the shock absorber, such shock absorbers 5 have higher price and are not available to any brands or kinds of motor vehicles. Therefore, it is not the best choice in practical applications.

### SUMMARY OF THE INVENTION

To solve the problems in the prior art, an objective of the present invention is to provide a front fork shock absorber in which a rebound adjusting button is arranged at its lower end so as to prevent the rebound adjusting button from being covered and difficult to adjust.

To achieve the aforementioned objective, the front fork shock absorber provided in the present invention mainly includes a shock absorber body, an adjusting rotating shaft, a sleeve, and a rebound adjusting button. The shock absorber body is provided with a damping adjusting structure. The adjusting rotating shaft is connected to the damping adjusting structure of the shock absorber body and extends to below the shock absorber body, and its free end is provided with a butt-joint structure. The sleeve is arranged below the shock absorber body and encases the adjusting rotating shaft. The rebound adjusting button is arranged below the sleeve and includes a knob, a connecting member, and a fastener. The connecting member is arranged on the knob and connected to the butt-joint structure. The fastener is used to fix the connecting member on the knob.

Preferably, the connecting member and the butt-joint structure are a corresponding groove and bump.

Preferably, the fastener is a helical element or a positioning pin, and a positioning hole corresponding to the fastener is formed on the bottom of the connecting member.

### BRIEF DESCRIPTION OF THE DRAWINGS

FIG. 1 is a schematic diagram of a conventional shock absorber structure;
FIG. 2 is a schematic diagram of the usage state of a conventional shock absorber structure;
FIG. 3 is a perspective view of a front fork shock absorber of the present invention;
FIG. 4 is an exploded view of a front fork shock absorber of the present invention;
FIG. 5 is a side cross-sectional view of a front fork shock absorber of the present invention.

### [Description of Reference Numbers]

1: shock absorber body
11: damping adjusting structure 2: adjusting rotating shaft
21: butt-joint structure
3: sleeve
31: lockhole base
32: lockhole
4: rebound adjusting button
41: knob
411: through-hole
42: connecting member
421: positioning part
422: positioning hole
423: bump
43: fastener
5: shock absorber

### DETAILED DESCRIPTION OF THE PREFERRED EMBODIMENTS

In order to facilitate understanding of the examination committee for the technical features, contents and advantages of the present invention and the effects achieved thereby, the present invention will be described in details with reference to the accompanying drawings and attachments by means of the embodiments. The drawings used therein are only intended to illustrate and assist the specification, and may not be the true scale and precise configuration of the present invention after implementation. Therefore, the scale and configuration relationship of the accompanying drawings should not be interpreted to limit the scope of the claims.

In the description of this implementation, it is to be understood that the orientations or positional relationship of the terms "upper", "lower", "left", "right", "top", "bottom", "inside", "outside", etc. indicate orientations or positional relationships that are based on the accompanying drawings, are intended only to illustrate and simplify the description of the disclosure, and not to indicate or imply that a device or an element referred to have a particular orientation and be constructed and operated in a particular orientation, and therefore shall not be construed as limiting the present invention.

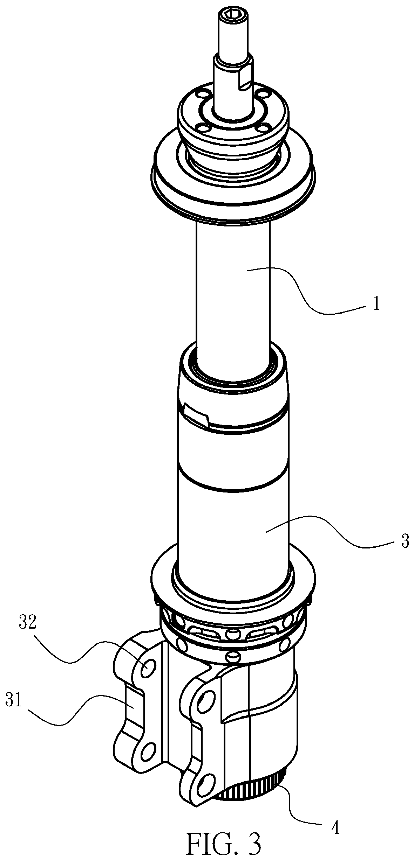

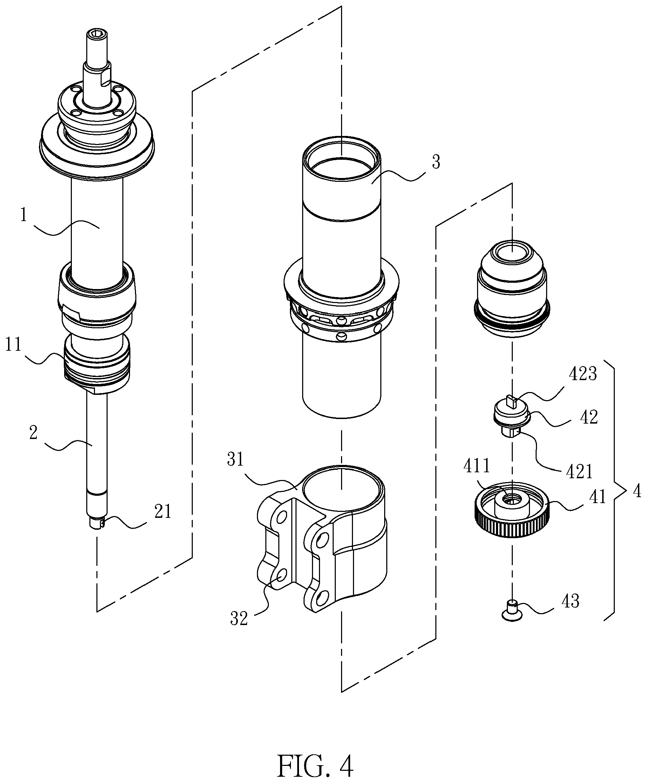

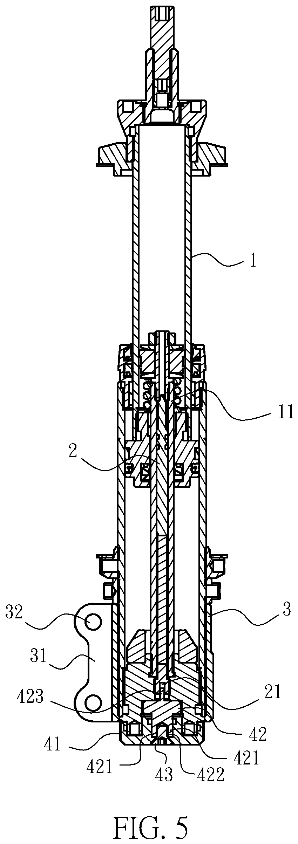

The embodiment is used on the mono-tube front fork shock absorber of the VESPA motor vehicle. Please refer to FIGS 3-5, a front fork shock absorber provided in the present invention mainly includes a shock absorber body 1, an adjusting rotating shaft 2, a sleeve 3, and a rebound adjusting button 4. The shock absorber body 1 at least includes a damping adjusting structure 11. The adjusting rotating shaft 2 is arranged at the lower end of the shock absorber body 1. One end of the adjusting rotating shaft 2 is connected to the damping adjusting structure 11, while the other end, opposite to the damping adjusting structure 11, of the rotating shaft 2 is provided with a butt-joint structure 21, which is a groove 21. The periphery of the sleeve 3 is provided with a lockhole base 31 which is provided with a plurality of lockholes 32 thereon. The rebound adjusting button 4 at least includes a knob 41, a connecting member 42, and a fastener 43. The axis of the knob 41 is provided with a through-hole 411. The connecting member 42 extends downwards to form a positioning part 421, and a positioning hole 422 is formed on the bottom of the positioning part 421. The connecting member 42 extends upwards its top to form a bump 423. The fastener 43 is a positioning pin or a helical element.

When the front fork shock absorber provided in the present invention is assembled and used, the steps include: connecting the sleeve 3 to the bottom of the shock absorber body 1; encasing the adjusting rotating shaft 2 by the sleeve 3 through the periphery of the adjusting rotating shaft 2; and enabling the positioning part 421 of the connecting member 42 of the rebound adjusting button 4 to pass through the through-hole 411 formed in the knob 41; then enabling the fastener 43 to penetrate under the knob 41 into the through-hole 411 and the positioning hole 422 located at the bottom of the positioning part 421 to fix the connecting member42 on the knob 41 in a butt-joint or locking manner; next, providing the rebound adjusting button 4 below the sleeve 3, and enabling the bump 423 on the top of the connecting member 42 of the rebound adjusting button 4 to embedded into the groove 21 of the free end of the adjusting rotating shaft 2; and then fixing the lockhole 32 on the lockhole base 31 at the periphery of the sleeve 3 with the structure (not shown in the figure) which is at the bottom end of a locking shock absorber for a motor vehicle; thereby, rotating the rebound adjusting button 4, by the front fork shock absorber provided in the present invention, to synchronously rotate the adjusting rotating shaft 2 with the structure of the bump 423 and the groove 21, so as to enable the adjusting rotating shaft 2 to adjust a damping size generated by the damping adjusting structure 11, as well as to arrange the rebound adjusting button 4 of the front fork shock absorber of the present invention below the shock absorber body 1 in order to avoid the rebound adjusting button 4 from being covered by a shell of the motor vehicle. Therefore, the present invention can solve the problem that damping can be adjusted only when the shell of the motor vehicle needs to be disassembled.

The above-mentioned contents indicate only some of the embodiments of the present invention but are not intended to limit the scope of the present invention, a person skilled in the art shall know that several variants and improvements may be made, which all are all within the scope of protection of the present invention.

## Claims

1. A front fork shock absorber, mainly comprising:
a shock absorber body (1), which is provided with a damping adjusting structure (11);
an adjusting rotating shaft (2), which is connected to the damping adjusting structure (11) of the shock absorber body (1) and extends below the shock absorber body (1), and the free end of the adjusting rotating shaft (2) being provided with a butt-joint structure (21);
a sleeve (3), which is arranged below the shock absorber body (1) and encases the adjusting rotating shaft (2);
a rebound adjusting button (4), which is arranged below the sleeve (3), including a knob (41), a connecting member (42) that is arranged on the knob (41) and is connected to the butt-joint structure (21), and a fastener (43) that is used to fix the connecting member (42) on the knob (41).

2. The front fork shock absorber according to claim 1, wherein the connecting member (42) and the butt-joint structure (21) are a corresponding groove and bump.

3. The front fork shock absorber according to claim 1, wherein the fastener (43) is a helical element or a positioning pin, and a positioning hole (422) corresponding to the fastener (43) being formed on the bottom of the connecting member (42).
